# EUROPÄISCHE PATENTSCHRIFT

(11) **EP 1 834 220 B1**
(45) Veröffentlichungstag und Bekanntmachung des Hinweises auf die Patenterteilung: **27.04.2011**
(21) Anmeldenummer: 05823997.1
(22) Anmeldetag: 14.12.2005
(51) Int. Cl.: G05B 19/042, G05D 16/20

(54) **REDUNDANTE ELEKTROHYDRAULISCHE VENTILANORDNUNG**
REDUNDANT ELECTROHYDRAULIC VALVE SYSTEM
DISPOSITIF DE SOUPAPE ELECTROHYDRAULIQUE REDONDANT

(30) Priorität: 07.01.2005 DE 102005001055
(43) Veröffentlichungstag der Anmeldung: 19.09.2007
(73) Patentinhaber: Voith Turbo GmbH & Co. KG, 89522 Heidenheim (DE)
(72) Erfinder: GOLL, Armin, 74673 Mulfingen (DE)
(74) Vertreter: Dr. Weitzel & Partner
(86) Internationale Anmeldenummer: PCT/EP2005/013429
(87) Internationale Veröffentlichungsnummer: WO 2006/072377

(56) Entgegenhaltungen:
- EP-A- 0 366 281
- US-A- 5 309 944
- US-A1- 2003 140 625
- US-A1- 2003 157 875

## Beschreibung

Die Erfindung betrifft eine redundante elektrohydraulische Ventilanordnung, insbesondere ein mit einer magnetischen Stelleinrichtung versehenes elektrohydraulisches Ventil sowie insbesondere dessen Verwendung zum Einregeln der Hublage eines Niederdruck-Arbeitszylinders.

Elektrohydraulische Ventile mit magnetkraftbetriebenen Stelleinrichtungen sind in vielzähligen Ausgestaltungen bekannt. Beispielsweise beschreibt die DE 197 19 557 A1 ein Proportional-Wegeventil mit einer auf den Ventilkolben aufgebrachten magnetischen Kraftwirkung. Eine Anwendung solcher elektrohydraulischen Ventile ist die Regelung eines Volumenstroms für einen Arbeitszylinder und damit die Einregelung der Hublage des Arbeitszylinders, wobei Im Nachfolgenden bevorzugt hydraulische Systeme im Niederdruckbereich behandelt werden.

Dokument EP 0366281 offenbart eine elektrohydraulische Ventilanordnung mit redundanten Ventilen, wobei die Anordnung derart ausgelegt ist, daß wenn ein Fehler in einem der Ventile auftritt, dieses Ventil deaktiviert wird, und das nicht-aktive Ventil aktiviert wird.

Ein solcher Arbeitszylinder kann wiederum zur Betätigung eines einer Dampfturbine zugeordneten Ventils dienen. Weitere typische Anwendungen bestehen in der Beaufschlagung eines in der Prozesstechnik verwendeten Ventils, beispielsweise für eine Verdichtungsvorrichtung. Insbesondere bei Anwendungen im Bereich der chemischen Industrie wird eine jahrelange, ununterbrochene Laufzeit eines Herstellungsprozesses angestrebt, woraus sich die Notwendigkeit einer besonders verfügungssicheren Ausbildung der Aktorik eines hierfür eingesetzten Prozessventils ergibt. Hieraus folgt auch die Anforderung einer möglichst redundanten Auslegung eines elektrohydraulischen Ventils zur Steuerung des Arbeitshubs eines Arbeitszylinders. Zusätzlich ist bei solchen Anwendungen eine Bauweise erforderlich, die sicherstellt, dass beim Auftritt eines Fehlers, der nicht mehr abgefangen werden kann, das System in einen betriebssicheren Zustand geführt wird. Beispielsweise wird ein einer Dampfturbine zugeordnetes Ventil im Fehlerfall durch den Arbeitszylinder geschlossen, so dass die nachfolgenden Anlagen stillgelegt und nicht unkontrolliert betrieben werden.

Eine einfache Parallelanordnung zweier baugleicher elektrohydraulischer Ventile ist jedoch insofern problematisch, da die hydraulische Verbindung der beiden Ventile beim Versagen eines der Ventile dazu führen kann, dass ein hydraulischer Kurzschluss auftritt und eine Kompensation der Fehlfunktion durch das zweite noch brauchbare Ventil somit unmöglich wird. Tritt eine Fehlfunktion auf, bei der ein Ventil in eine seiner Extremlagen voll ausgesteuert wird, so entsteht eine offene Verbindung zwischen dem Zulaufkanal und dem Arbeitskanal oder dem Ablaufkanal und dem Arbeitskanal. Die Regelung des zweiten noch arbeitenden Ventils wird versuchen den Druckanstieg bzw. den Druckabfall im Arbeitskanal zu kompensieren indem sie das zweite Ventil in Opposition zum ersten defekten Ventil verstellt. Dadurch entsteht ein hydraulischer Kurzschluss entweder durch die Verbindung vom Zulaufkanal über den Arbeitskanal zum Ablaufkanal oder vom Ablaufkanal über den Arbeitskanal zum Zulaufkanal. Zur Umgehung dieser Problematik können beispielsweise Schaltventile eingesetzt werden, um die Zulaufs- und Arbeitskanäle parallel geschalteter hydraulischer Ventile im Fehlerfall voneinander zu trennen. Der Nachteil solcher Schaltventile ist jedoch, dass diese im Niederdruckbereich groß bauen und ihrerseits ausfallgefährdet sind, was wiederum die Standsicherheit und Verfügbarkeit der Anordnung absenkt. Darüber hinaus wäre eine übergeordnete Steuerlogik notwendig, um einen Fehlerfall an einer Ventilvorrichtung zu erkennen und diese dann mit den ihr zugeordneten Schaltventilen hydraulisch abzutrennen. Ein solchermaßen übergeordnetes Steuerungssystem wäre jedoch konstruktiv aufwendig und stellt eine weitere mögliche Fehlerquelle dar, so dass auch hierfür eine redundante Auslegung zur Erhöhung der Standsicherheit notwendig wäre.

Der Erfindung liegt die Aufgabe zugrunde, eine redundante elektrohydraulische Ventilanordnung anzugeben, wobei die redundante elektrohydraulische Ventilanordnung so ausgebildet sein soll, dass auf eine übergeordnete Steuereinrichtung zur Fehlererkennung verzichtet werden kann. Darüber hinaus sollte eine Stilllegung und eine nachfolgende Abtrennung einer fehlerhaften Ventilvorrichtung möglich sein, ohne dass zusätzliche Schaltventile zur Kopplung bzw. der Entkopplung eingesetzt werden müssen. Dabei sollte das bisher übliche Überführen des Systems im Fehlerfall in einen sicheren Betriebszustand beibehalten werden, so dass eine sichere Betriebsführung und ein kontrolliertes Abschalten jederzeit möglich ist.

Zur Lösung der erfindungsgemäßen Aufgabe wurde zunächst erkannt, dass auf eine übergeordnete Steuereinrichtung zur Fehlererkennung dann verzichtet werden kann, wenn die redundante elektrohydraulische Ventilanordnung aus im Wesentlichen gleichbauenden Ventilvorrichtungen besteht, welche zueinander parallel angeordnet sind. Nur eine dieser Ventilvorrichtungen ist während des Betriebs aktiv, d. h. sie übernimmt die Regelungsfunktion für das hydraulische Medium. Während die parallel angeordnete zweite Ventilvorrichtung zwar eingeschaltet ist, jedoch keine Regelungsfunktion wahrnimmt, d. h. sie verhält sich passiv.

Die passive Ventilvorrichtung überwacht jedoch die Betriebsfunktionen, insbesondere die Regelungsabweichung, so dass es ihr möglich ist, eine Fehlfunktion der aktiven Ventilvorrichtung zu detektieren. In diesem Fall wird die passive Ventilvorrichtung die ursprünglich aktive Ventileinrichtung abschalten und sich selbst aktivieren. Dieser Vorgang wird im Folgenden als konkurrierende Umschaltung bezeichnet. Andererseits ist es auch möglich, dass die aktive Ventilvorrichtung selbst eine Fehlfunktion detektiert, beispielsweise durch die Überwachung von Sollwerten und von Regelungsabweichungen auf Plausibilität, und von sich aus ein Umschalten auf die bisher passive Ventilvorrichtung durchführt und sich selbst deaktiviert. Dies wird als kooperatives Umschalten bezeichnet.

Zur Vermeidung hydraulischer Kurzschlüsse im Fehlerfall, sind die einer Ventilvorrichtung zugeordneten Stelleinrichtungen vorzugsweise zweistufig aufgebaut. Eine erste Stufe dient der Erzeugung einer geregelten Kraftbeaufschlagung für den Steuerkolben des Ventils, diese wird im Normalbetrieb verwendet. Diese Kraft wird durch einen Regelungsmagneten erzeugt, dem eine Kraftregelungseinheit zugeordnet ist.

Eine zweite Stufe der Stelleinrichtung dient dazu, im Fehlerfall den Ventilkolben in die hydraulische Neutralposition zu bewegen, so dass der Arbeitskanal weder mit dem Zulauf- noch mit dem Ablaufkanal kurzgeschlossen ist und so eine Trennung der fehlerbehafteten Ventilvorrichtung vom hydraulischen Kreis bewirkt wird. Bevorzugt ist diese zweite Stufe der Stelleinrichtung ebenfalls mit einem Magnetkraftsystem ausgestattet, wobei dies zur Vereinfachung kein Regelungssondern lediglich ein Steuermagnet sein kann, welcher im Fehlerfall mit Maximalkraft beaufschlagt wird und dessen Stellbewegung durch einen Anschlag begrenzt wird, der in einer solchen Lage angeordnet ist, dass die durch den Steuermagneten erzeugte Bewegung des Ventilkolbens in der hydraulischen Neutralposition der Ventilvorrichtung stoppt. Anstatt eines Magnetkraftsystems für die zweite Stufe der Stellvorrichtung können auch andere Vorrichtungen verwendet werden, mit denen es möglich ist, den Ventilkolben in die hydraulische Neutralposition zu bewegen. Dies kann beispielsweise ein mittels Federkraft vorgespanntes System sein, das im Fehlerfall ausgeklinkt wird und gegen einen geeignet positionierten Anschlag läuft.

In einer besonders bevorzugten Ausgestaltung sind die Mittel zur Erkennung eines Fehlers jeweils der ersten Stufe der Stelleinrichtung zugeordnet, in der auch die Kraftbeaufschlagung des Ventilkolbens während des Normalbetriebs geregelt wird. Besonders bevorzugt werden zur Fehlerüberwachung die Regelungssollwerte auf Plausibilität untersucht, ein Fehlerfall liegt u.a. dann vor, wenn kein Sollwert anliegt. Eine solche Situation kann beispielsweise bei einem Kabelbruch entstehen. Außerdem können noch zusätzliche Schwellwerte für das Sollsignal gesetzt werden, um unmögliche Sollvorgaben als Fehler zu erkennen. Weiterhin wird bevorzugt, die Regelabweichung zu überwachen und bei Überschreitung einer maximalen Regelungsabweichung eine kooperative Umschaltung auf die bisher passive Ventilvorrichtung einzuleiten. Eine weitere Fehlerbedingung kann durch den zeitlichen Verlauf der Regelungsabweichung gegeben sein. Werden in einer bevorzugten Ausgestaltung Zweipunktregler verwendet, kann zusätzlich auch das sich ergebende Regelungstaktsignal überwacht werden.

In einer bevorzugten Ausgestaltung einer Parallelanordnung einer ersten Ventilvorrichtung und einer zweiten Ventilvorrichtung stehen jeweils die ersten, für die Regelung vorgesehene Stufen der Stelleinrichtungen mit den jeweils zweiten, zur Rückführung auf die Neutralposition vorgesehene Stufen der Stelleinrichtungen in Verbindung. Auf diese Weise kann eine zunächst passive Ventilvorrichtung, welche die aktive Ventilvorrichtung beobachtet, im Fehlerfall die zweite Stufe der Stelleinrichtung der aktiven Ventilvorrichtung so ansteuern, dass die Regelung der bisher aktiven Ventilvorrichtung abgeschaltet wird und der Ventilkolben der bisher aktiven Ventilvorrichtung zur hydraulischen Neutralposition bewegt wird. Für diesen Fall wird dann die bisher aktive Ventilvorrichtung abgeschaltet und gemäß einer bevorzugten Ausführungsform initiiert dieser Abschaltvorgang auch gleichzeitig das Umschalten auf die bisher passive Ventilvorrichtung.

Im Folgenden wird die Erfindung anhand von Figuren genauer beschrieben. Hierbei ist im Einzelnen Folgendes dargestellt:
- Fig. 1: zeigt eine erfindungsgemäße Parallelanordnung von zwei elektrohydraulischen Ventilvorrichtungen, wobei diese Parallelanordnung ein redundantes elektrohydraulisches Ventil zur Regelung der Hublage eines Arbeitszylinders bildet.
- Fig. 2: zeigt eine einzelne Ventilvorrichtung mit einer einstufigen Magnetkrafteinheit und einem 3/3-Hydraulikventil.
- Fig. 3: zeigt die Positionsregelung eines Arbeitszylinders mit einer unterlagerten Kraftregelung für ein elektrohydraulisches Wegeventil.
- Fig. 4: zeigt eine Ausführungsform einer redundanten Anordnung magnetischer Regelungs- und Steuereinrichtungen für das erfindungsgemäße redundante elektrohydraulisches Ventil, welche eine konkurrierende und eine kooperierende Umschaltung zwischen einem aktiven und einem passiven Steuerungssystem des redundanten, elektrohydraulischen Ventils realisiert.

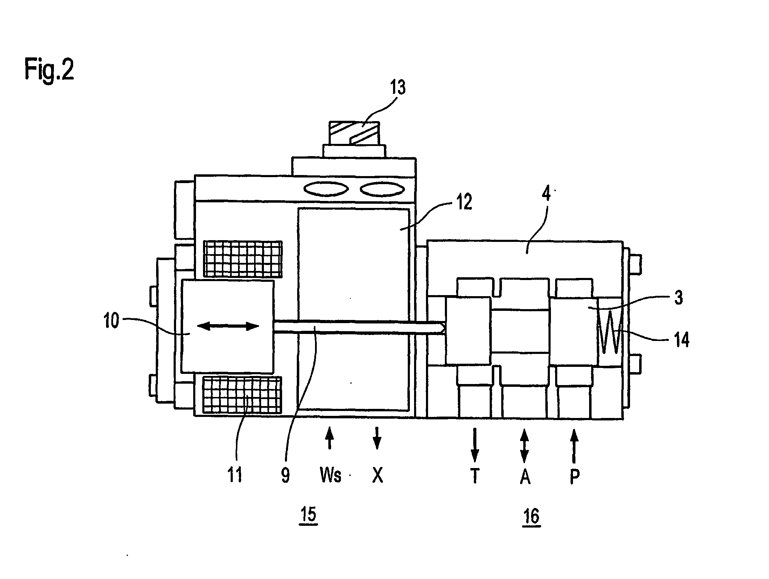

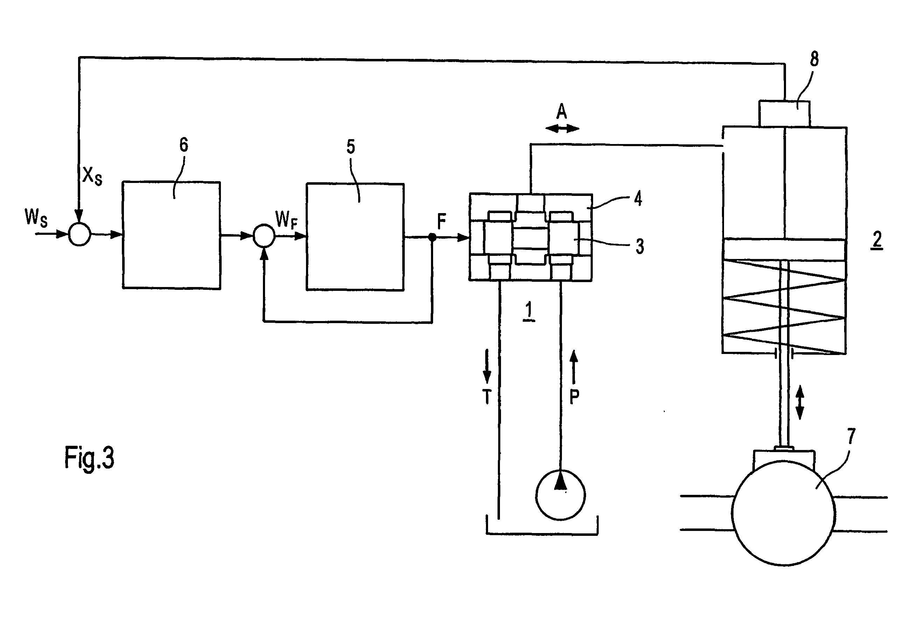

In Figur 3 ist eine typische Anordnung eines elektrohydraulischen Ventils 1 zur Regelung der Hublage eines Arbeitszylinders 2 skizziert. Die hydraulische Komponente des Hydraulikventils 1 ist in den Figuren 2 und 3 als 3/3-Ventil dargestellt, weitere Ausgestaltungen, beispielsweise ein 4/3-Ventil, sind jedoch denkbar. Das Hydraulikventil umfasst wenigstens einen Zulaufkanal P und einen Ablaufkanal T sowie einen beispielsweise mit dem Arbeitszylinder 2 in Verbindung stehenden Arbeitskanal A. Je nach Stellung des Ventilkolbens 3 im Ventilkörper 4 sowie der gewählten Lage der Steuerkanten des Ventilkolbens und jener des Ventilgehäuses wird ein Verbindungskanal zwischen dem Zulauf P und dem Arbeitskanal A bzw. zwischen dem Arbeitskanal A und dem Ablaufkanal T gebildet. Durch das Zuströmen des hydraulischen Arbeitsmediums vom Zulaufkanal P zum Arbeitskanal A wird der Druck im Arbeitszylinder 2 ansteigen und aufgrund der im Einzelnen nicht gezeigten Ausgestaltung des Hydraulikventils auf der Stirnseite des Ventilkolbens ein solcher Gegendruck entstehen, dass der Ventilkolben zur hydraulischen Mitte geführt wird und in der so genannten hydraulischen Neutralposition sowohl die Verbindung des Zulaufkanals P zum Arbeitskanal A wie auch die Verbindung zwischen Arbeitskanal A und Ablaufkanal T geschlossen ist.

Folglich kann durch eine Aufbringung einer Kraft in Axialrichtung auf den Ventilkolben ein Volumenstrom vom oder in den Arbeitszylinder erzeugt werden, was in einer Veränderung der Hublage des Arbeitszylinders resultiert. Durch die Hinzunahme von in Figur 3 nicht im Einzelnen gezeigten Energiespeicherelementen im Hydraulikventil kann dieses als Proportional-Wegeventil ausgebildet sein. Auch ein reines Wegeventil ist denkbar.

Zur Aufbringung einer geregelten Axialkraft auf den Ventilkolben 3 wird bevorzugt eine magnetische Stelleinrichtung 5 verwendet, wobei dieser ein Sollwert W_{F} für die Magnetkraft vorgegeben wird und ein Regler vorgesehen ist, welcher zur Einregelung dieser Kraftvorgabe dient.

Derartige Ventile sind beispielsweise aus den Prospekten
1) RD 29 586/09.89 der Mannesmann Rexroth
2) Fluidtechnik Nr. 7502263.0503.92 der Herion-Werke KG
bekannt.

Besonders bevorzugt wird zur Regelung der Kraftwirkung der magnetischen Stelleinrichtung 5 die Stärke des magnetischen Flusses, zum Beispiel mittels eines Hall-Sensors, gemessen und in einen Kraftwert umgerechnet, der dann wiederum als Kraft-Ist-Wert dem Kraft-Regel-Kreis zurückgeführt wird.

Der Arbeitszylinder 2 stellt in einer typischen Anwendung über eine Anpassung seiner Hublage die Stellung eines Prozessventils 7 ein. Derartige Prozessventile werden üblicherweise für Dampfturbinen in einer Maschineneinheit zur elektrischen Stromerzeugung verwendet. Häufig sind solche Turbine auch für Verdichter, beispielsweise für Raffinerien oder chemische Anlagen oder für die Hüttenindustrie vorgesehen.

Die Sollvorgabe für die Hublage Wₛ des Arbeitszylinders 2 wird mittels einer Positionsregeleinheit 6 eingestellt, welche auf die Kraftregelungseinheit der magnetischen Stelleinrichtung 5 im Sinne einer unterlagerten Regelung zugreift. Die Positionsregeleinheit 6 wird am Eingang mit der Regelabweichung beaufschlagt, welche aus der Differenz zwischen einem extern vorgegebenen Positionssollwert Wₛ und dem gemessenen Positionsistwert Xₛ des Arbeitszylinders gebildet wird. Zur Bestimmung des Positionsistwertes Xₛ des Arbeitszylinders wird vorzugsweise eine am Arbeitszylinder angebrachte Wegemesseinrichtung 8 verwendet.

Figur 2 zeigt eine elektrohydraulische Ventilvorrichtung der voranstehend genannten Art umfassend einen Ventilkörper 4 und einen Ventilkolben 3. Wobei für dieses hier gezeigt 3/3-Ventil durch die Wahl der Lage der Steuerkanten von Ventilkolben 3 und Ventilkörper 4 und der Axialstellung des Ventilkolbens 3 im Verhältnis zum Ventilkörper 4 eine Verbindung zwischen einem Zulaufkanal P und einem Arbeitskanal A zum einen und dem Arbeitskanal A und dem Ablaufkanal T zum anderen hergestellt werden kann. Außerdem kann der Ventilkolben 3 auch in eine hydraulische Neutralposition gebracht werden, für die keine Verbindung des Arbeitskanals A mit dem Zulaufkanal P und dem Ablaufkanal T besteht. Die in Figur 2 dargestellte Ausführung zeigt eine Energiespeichereinheit 14 in Form einer Feder, so dass das hydraulische Ventil als Proportional-Wegeventil ausgebildet ist. Zur Beaufschlagung des Ventilkolbens 3 mit einer Kraft in axialer Richtung steht dieser in wenigstens mittelbarer Wirkverbindung mit einem Stößel 9 und einem Anker 10, der wiederum durch das mittels einer Spule 11 generierte Magnetfeld eine axiale Kraftwirkung bewirkt. Ferner umfasst der Regelmagnet 15 der elektrohydraulischen Ventilvorrichtung eine Regelungs- und Steuerelektronik, der einen Positionssollvorgabe Wₛ sowie ein Positionsistwert X des Arbeitszylinders zugeführt wird. Intern wird dann für den unterlagerten Regelkreis die Sollvorgabe für den Kraftverlauf auf den Ventilkolben 3 der hydraulischen Komponente 16 vorgegeben.

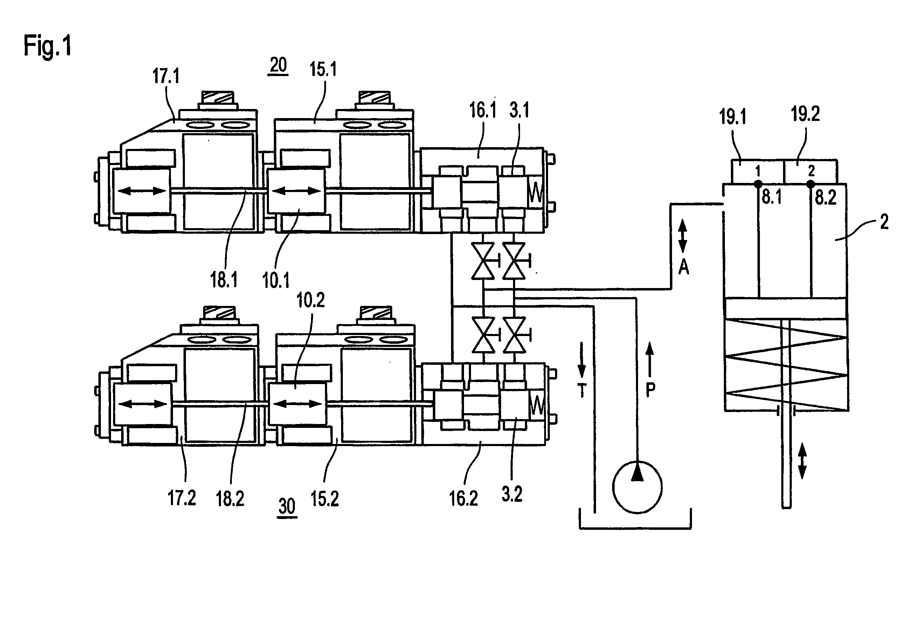

Eine Ausgestaltung einer erfindungsgemäß redundanten ausgelegten elektrohydraulischen Ventilanordnung ist in Figur 1 in schematisch vereinfachter Darstellung gezeigt. Gegenüber der einfachen elektrohydraulischen Ventilvorrichtung aus Figur 2 sind zwei hydraulische Ventilvorrichtungen 16.1 und 16.2 mit dem ersten Ventilkolben 3.1 und dem zweiten Ventilkolben 3.2 parallel zueinander angeordnet, d. h. die Zulaufkanäle P und die Ablaufkanäle T stehen jeweils in hydraulischer Verbindung zueinander. Ferner greift sowohl die erste hydraulische Einheit 16.1 wie auch die zweite hydraulische Einheit 16.2 auf den mit dem Hydraulikzylinder 2 verbundenen Arbeitskanal A zu. Vorzugsweise werden am Arbeitszylinder 2 zur Positionsbestimmung zwei unabhängig voneinander arbeitende Wegemesseinrichtungen 8.1 und 8.2 angebracht. Die erste Wegemesseinrichtung 8.1 ist für den ersten Regelmagneten 15.1 und die zweite Wegemesseinrichtung 8.2 entsprechend für den zweiten Regelmagneten 15.2 vorgesehen. Die magnetische Einheit der ersten Ventilvorrichtung 20 und jene der zweite Ventilvorrichtung 30 sind jeweils durch zwei unabhängige Stufen realisiert. Die jeweils ersten Stufen 15.1 und 15.2 stellen Regelmagnete dar, d. h. mit deren Hilfe ist es möglich, eine geregelte Axialkraftwirkung auf den Ventilkolben der entsprechenden hydraulischen Komponente 16.1 und 16.2 auszuüben. Zusätzlich weist sowohl die erste Ventilvorrichtung 20 wie auch die zweite Ventilvorrichtung 30 in einer zweiten Stufe jeweils einen Steuermagneten 17.1 bzw. 17.2 auf. Die Funktion dieser Steuermagneten besteht darin, den jeweiligen Ventilkolben im Fehlerfall in die hydraulische Neutralposition zu bewegen, um einen hydraulischen Kurzschluss zu vermeiden. Zur Realisierung dieser Funktion wird im einfachsten Fall der Steuermagnet dem Regelmagnet vorgeschaltet, so dass dieser über einen Stößel 18.1, 18.2 den entsprechenden Anker 10.1, 10.2 des Regelmagneten 15.1, 15.2 und damit auch die jeweiligen Ventilkolben der zugeordneten hydraulischen Ventilkomponenten 16.1, 16.2 in die hydraulische Neutralposition bewegen kann.

Im Betrieb des parallel ausgelegten elektrohydraulischen Ventils wird entweder nur die erste oder nur die zweite elektrohydraulische Ventilvorrichtung aktiv sein, d. h. nur deren Positionsregler wird die Hublage des Arbeitszylinders 2 bestimmen. Die jeweils andere, passive elektrohydraulische Ventilvorrichtung wird eine abgeschaltete Regelfunktion und eine hydraulische Komponente in der Neutralposition aufweisen. Hierzu zwingt der Stellmagnet 17.1, 17.2 der passiven Ventilvorrichtung den Ventilkolben der hydraulischen Komponente 16.1, 16.2 in die hydraulische Neutralposition, während der Regelmagnet 15.1, 15.2 der passiven Ventilvorrichtung außer Funktion ist.

Die passive Ventilvorrichtung bleibt gleichwohl eingeschaltet, d. h. sie überwacht den Regelungssollwert für die Hublage des Arbeitszylinders sowie die aktuell anliegende Regelabweichung und den ihr zugeordneten Istwert. Liegen keine Sollwerte bzw. Istwerte vor oder liegen diese außerhalb bestimmter Grenzen, so wird ein Fehlerfall angenommen. Entsprechendes gilt ab einer bestimmten Regelabweichung bzw. mit dem Überschreiten einer bestimmten Veränderungsgeschwindigkeit der Regelungsabweichung. Im Fehlerfall wird die passive und überwachende Ventilvorrichtung ein Umschaltsignal an die aktive Ventilvorrichtung weiterleiten. In einer bevorzugten Ausgestaltung wird dieses Signal dem Steuermagnet 17.1, 17.2 der aktiven Ventilvorrichtung zugeleitet. Diese führt dann den Ventilkolben 16.1, 16.2 in die hydraulische Neutralposition und schaltet den Regelmagnet 15.1, 15.2 der aktiven Ventilvorrichtung ab. Diese von der bisher passiven Ventilvorrichtung erzwungene Umschaltung ist als konkurrierende Umschaltung zu verstehen.

Weiterhin kann auch von der jeweils aktiven Ventilvorrichtung selbst im Falle eines durch Selbstdiagnostik erkannten Fehlers eine kooperative Umschaltung auf die bisher passive Ventilvorrichtung vorgenommen werden, wobei auch für diesen Fall entsprechende Oberwachungsfunktionen bezüglich der Sollwerte, Istwerte und der Regelabweichungen in der bisher aktiven Ventilvorrichtung vorgesehen sind.

In einer vorteilhaften Ausgestaltung umfasst der unterlagerte Kraftregler des Regelmagnets der elektrohydraulischen Ventilvorrichtungen einen Zweipunktregler. Dies führt zu einer zeitlichen Taktung des Kraft-Ist-Signals und damit zu einem ständigen Aufprägen kleiner Stellbewegungen auf die mechanischen Komponenten des Ventils, die somit eine reduzierte Gleitreibung aufweisen. Das erwünschte Taktsignal kann wiederum zur Überwachung bzw. der Selbstdiagnostik der parallel angeordneten Ventilvorrichtungen verwendet werden, da bei Ausbleiben der Taktung nach einem vorbestimmten Zeitintervall von einer Fehlfunktion ausgegangen werden kann und eine kooperative bzw. konkurrierende Umschaltung eingeleitet wird.

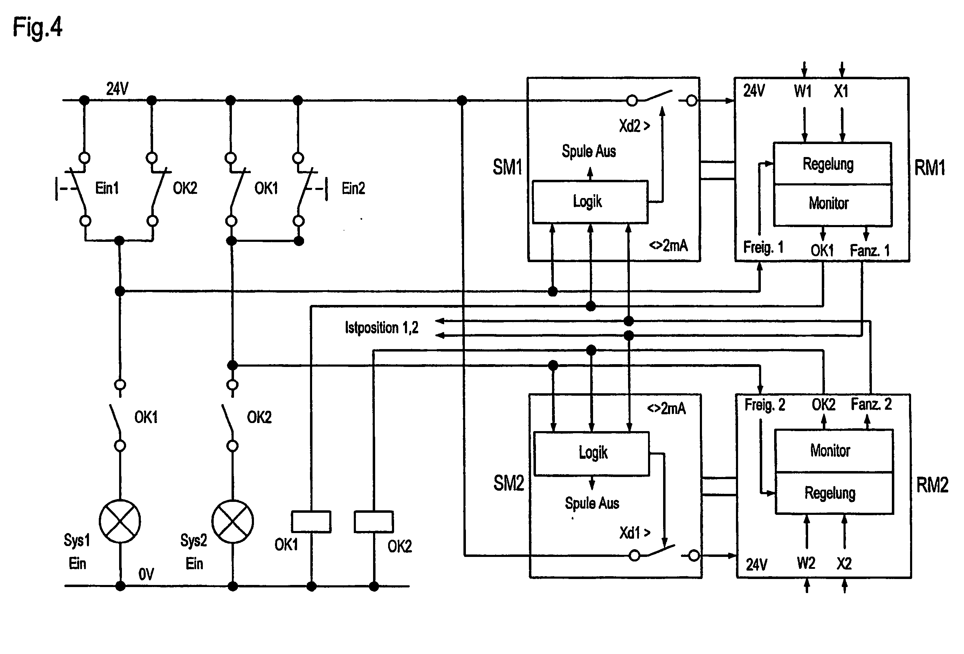

In Figur 4 ist eine Ausgestaltung zur Realisierung der konkurrierenden bzw. kooperativen Umschaltung zwischen zwei parallel angeordneten elektrohydraulischen Ventilvorrichtungen skizziert. Im Einzelnen ist das Verdrahtungsschema für die Steuereinrichtungen der ersten und zweiten magnetischen Komponente skizziert. Dargestellt ist die Steuereinrichtung SM1 für den ersten Steuermagneten 17.1 und die Steuereinrichtung RM1 für den ersten Regelmagneten 15.1 sowie die Steuereinrichtung SM2 für den zweiten Steuermagneten 17.2 und die Steuereinrichtung RM2 für den zweiten Regelmagneten 15.2. Jeder Steuereinrichtungen ist eine Spannungsversorgung zugeführt, die selbst wiederum bevorzugt redundant ausgebildet ist, beispielsweise durch die Verwendung von Diodenmodulen zur Zusammenschaltung mehrerer elektrischer Versorgungseinheiten. Zur Realisierung der kooperativen und der konkurrierenden Umschaltung werden die Signaleingänge Freigabe 1 (Freig. 1) und Freigabe 2 (Freig. 2), die Signalausgänge OK1 und OK2 sowie die Signalausgänge Femanzeige 1 (Fanz. 1) und Femanzeige 2 (Fanz.2) für die Steuereinrichtungen RM1 und RM2 vorgesehen. Hierbei ist zu beachten, dass das eigentlich zum Zwecke der Funktionsausgabe an eine Leitstelle vorgesehene Ausgabesignal Fernanzeige 1 bzw. Femanzeige 2 einen Ausgabebereich von 4 mA - 20 mA für den Normalbetrieb vorsieht und mit dem nicht genutzten Signalbereich unterhalb dieses Normal-Intervalls ein Kabelbruch durch das Signal 0 mA und eine sonstigen Fehlerinformation durch das Signal 2 mA angezeigt werden können.

Der Signalausgang Fernanzeige 1 der Steuereinrichtung RM1 für den ersten Regelmagnet ist neben der Verbindung zur Leitstelle (Istposition 1, 2) mit der Steuereinrichtung SM2 des zweiten Steuermagneten verbunden. Entsprechend ist der Ausgang Fernanzeige 2 der Steuereinrichtung RM2 des zweiten Regelmagneten mit der Steuereinrichtung SM1 des ersten Steuermagneten verbunden. Über dieses Ausgangssignal kann eine passive Ventilvorrichtung ein Fehlersignal (= 2 mA) an die Steuereinrichtung des Steuermagneten der aktiven Ventilvorrichtung weiterleiten. Hierdurch wird eine konkurrierende Umschaltung eingeleitet, was nachfolgend durch eine als passiv angenommene zweite Ventilvorrichtung erklärt wird. Erkennt die zweite, passive und nur beobachtende Ventilvorrichtung einen Fehlerzustand, so wird sie diesen durch die Anzeige eines Ausgabesignals von 2 mA auf der Femanzeige 2 an die Steuereinrichtung SM1 des ersten Steuermagneten weiterleiten. Dieser wird dann den Regelmagneten 1 von der Spannungsversorgung trennen. Hieraus folgt, dass der Signalausgang OK1 den Ausgangswert 0 annimmt und über eine entsprechend gewählte Verschaltung der Steuereinrichtung RM2 für den zweiten Regelmagneten ein Freigabesignal auf dessen Freigabe 2 Eingang zugeleitet wird. Hierdurch wird die Regelungsfunktion des zweiten Regelmagneten aktiviert. Darüber hinaus stellt der erste Steuermagnet den Steuerkolben der ersten Ventilvorrichtung auf die hydraulische Neutralposition, während der zweite Stellmagnet nicht bestromt wird und somit Stellbewegungen des zweiten Ventilkolbens zur Auskorrektur von Regelungsabweichungen des Arbeitszylinders 2 durchgeführt werden können.

Eine kooperierende Umschaltung von einer als aktiv angenommenen Ventilvorrichtung 1 auf die zunächst passive Ventilvorrichtung 2 wird durch eine Deaktivierung des zunächst aktiven OK1-Signalausgangs durch RM1 bewirkt. Auch hierbei wird der Steuereinrichtung RM2 des zweiten Regelmagneten über die Freigabeleitung 2 ein Freigabesignal zugeführt, wobei eine Aktivierung des OK2-Signals zur gewünschten Abschaltung des zweiten Steuermagneten führt. Entsprechend einer in Figur 4 dargestellten bevorzugte Ausgestaltung wird ein Steuermagnet nur dann deaktiviert, wenn sowohl das Freigabesignal wie auch das OK-Signal der jeweiligen Ventilvorrichtung als aktiv gesetzt sind und zugleich die Femanzeige der jeweils anderen Ventilvorrichtung nicht das Fehlersignal von 2 mA annimmt.

Entsprechend einer Weitergestaltung des erfindungsgemäßen elektrohydraulischen Ventils werden die beiden parallel angeordneten Ventilvorrichtungen durch Spenventileinheiten mit dem gemeinsamen Zulaufkanal, dem gemeinsamen Arbeitskanal und dem gemeinsamen Ablaufkanal verbunden. Durch diese Maßnahme ist es möglich, eine fehlerhafte Einheit nach deren Abschaltung auszutauschen bzw. routinemäßige Wartungsarbeiten durchzuführen, während die zweite Ventilvorrichtung die Positionsregelungsfunktion für den Arbeitszylinder aufrechterhält. Allerdings dienen diese Sperrventilvorrichtungen nicht dazu, beim Eintritt des Fehlerfalls einen hydraulischen Kurzschluss zu verhindern, dies geschieht erfindungsgemäß durch eine Stellvorrichtung, die als eine von der Regelungsvorrichtung getrennte Einheit ausgebildet ist, und deren Aufgabe darin besteht, den Ventilkolben in die hydraulische Neutralposition zu bewegen. Daraus folgt, dass die vorzugsweise als Handsperrventile ausgeführten Sperrventilvorrichtungen, die im Normalbetrieb geöffnet sind, nicht die Verfügbarkeit der Gesamteinrichtung beeinträchtigen und auch nicht die Abschaltbarkeit der Gesamteinrichtung beeinflussen.

Das erfindungsgemäße elektrohydraulische Ventil umfasst bevorzugt zwei gleichbauende parallel angeordnete Ventilvorrichtungen, welche gleichberechtigt agieren, wobei jedoch jeweils nur eine dieser Ventilvorrichtungen aktiv ist, während die andere eine passive Beobachtungsfunktion ausfüllt. Die Umschaltung im Fehlerfall kann sowohl von der passiven wie auch von der aktiven Ventilvorrichtung eingeleitet werden. Auch eine gezielte Auswahl einer zu aktivierenden Ventilvorrichtung ist von außen möglich bzw. kann an die Leitstelle für Diagnosezwecke weitergeleitet werden. Durch diese Maßnahme ist ein Umschalten zwischen den einzelnen Ventilvorrichtungen ohne Funktionseinbuße im fortlaufenden Betrieb möglich. Diese Umschaltmöglichkeit kann auch für Testzwecke zur Kontrolle des gegenwärtig passiven Systems genutzt werden. Eine Signalisierung der aktiven Ventilvorrichtung erlaubt es dem Betreiber jederzeit zu erkennen, welches der beiden Systeme aktiv regelt.

In einer Weitergestaltung der erfindungsgemäßen elektrohydraulischen Ventilanordnung kann zusätzlich der Zulaufkanal P gedrosselt ausgelegt werden. Eine Möglichkeit zur Realisierung dieser Maßnahme besteht darin, für den Zulaufkanal P einen größeren Querschnitt im Vergleich zum Ablaufkanal T zu wählen. Alternativ kann im Zulaufkanal P eine Blende oder eine Drosselvorrichtung vorgesehen sein. Durch diese Maßnahme wird erreicht, dass die Ölabsteuerbarkeit eines Ventils im Fehlerfall verbessert wird. Durch diese Vorzugsrichtung beim Betreiben des Arbeitszylinders und einer daraus resultierenden Ungleichgewichtung für die Bewegungsrichtung des Arbeitszylinders ist es möglich, diese Vorzugsrichtung in Richtung eines sicheren Betriebszustandes eines vom Arbeitszylinder bewegten Prozessventils anzulegen. Im Fehlerfall wird dann das vom Arbeitszylinder bewegte Prozessventil bevorzugt schließen und nicht unkontrolliert eine maximale Öffnungsposition einnehmen. Diese Vorzugsrichtung ist insbesondere dann wichtig, wenn trotz aller voranstehend beschriebenen Maßnahmen zur redunanten Auslegung der elektrohydraulischen Ventilanordnung dennoch ein hydraulischer Kurzschluß vorliegen sollte.

## Patentansprüche

1. Elektrohydraulische Ventilanordnung, umfassend
1.1 einen Zulaufkanal P, einen Arbeitskanal A und einen Ablaufkanal T;
1.2 eine erste Ventilvorrichtung (20) mit einem ersten Ventilkolben (3.1), einer ersten Steuereinrichtung und einer ersten magnetischen Regeleinrichtung zur Beaufschlagung des ersten Ventilkolbens (3.1) mit einer geregelten Betätigungskraft;
1.3 eine zweite Ventilvorrichtung (30) mit einem zweiten Ventilkolben (3.2), einer zweiten Steuereinrichtung und einer zweiten magnetischen Regeleinrichtung (15.2) zur Beaufschlagung des zweiten Ventilkolbens (3.2) mit einer geregelten Betätigungskraft;
1.4 die erste und die zweite Ventilvorrichtung (20, 30) sind parallel zueinander angeordnet, so dass durch eine Positionierung des ersten Ventilkolbens (3.1) und/oder des zweiten Ventilkolbens (3.2) eine hydraulische Verbindung zwischen dem Zulaufkanal P und dem Arbeitskanal A und/oder dem Arbeitskanal A und dem Ablaufkanal T hergestellt oder eine solche Verbindung geschlossen werden kann;
1.5 im Betrieb ist entweder die erste Ventilvorrichtung oder die zweite Ventilvorrichtung (3.1, 3.2) aktiv und erfüllt die Funktion der elektrohydraulischen Ventilanordnung, die jeweils andere Ventilvorrichtung ist passiv;
1.6 erkennt die Steuereinrichtung der bisher aktiven Ventilvorrichtung einen Fehler, so aktiviert sie die bisher passive Ventilvorrichtung und deaktiviert sich selbst;
1.7 erkennt die Steuereinrichtung der bisher passiven Ventilvorrichtung einen Fehler, so aktiviert sie sich selbst und deaktiviert die bisher aktive Ventilvorrichtung;
1.8 die Deaktivierung einer Ventilvorrichtung umfasst das Bewegen des Ventilkolbens dieser Ventilvorrichtung zur hydraulischen Neutralposition mittels einer von der magnetische Regeleinrichtung separaten Vorrichtung.

2. Elektrohydraulisches Ventil nach Anspruch 1, **dadurch gekennzeichnet, dass** die erste und/oder die zweite magnetische Regeleinrichtung (20, 30) einen Regelmagneten (15.1, 15.2) umfasst, dem ein Kraftsollwert für die Betätigungskraft des Ventilkolbens (3.1, 3.2) vorgegeben wird.

3. Ventilvorrichtung nach Anspruch 2, **dadurch gekennzeichnet, dass** die erste Ventilvorrichtung (20) und/oder die zweite Ventilvorrichtung (30) einen Steuermagnet (17.1, 17.2) umfasst, der bei Aktivierung den Ventilkolben (3.1, 3.2) zur hydraulischen Mitte bewegt.

4. Elektrohydraulisches Ventil nach wenigstens einem der Ansprüche 2 oder 3, **dadurch gekennzeichnet, dass** das elektrohydraulische Ventil den Volumenstrom für wenigstens einen zugeordneten Arbeitszylinder (2) regelt und der ersten Ventilvorrichtung und/oder der zweiten Ventilvorrichtung ein Positionsregler (6) zugeordnet ist, der durch die Regelung des Volumenstroms die Stellung des Arbeitszylinders (2) regelt.

5. Elektrohydraulisches Ventil nach Anspruch 4, **dadurch gekennzeichnet, dass** der Positionsregler (6) einen unterlagerten Regelkreis für die Regelung der Betätigungskraft (5) des Ventilkolbens (3.1, 3.2) umfasst.

6. Elektrohydraulisches Ventil nach wenigstens einem der Ansprüche 1 bis 5, **dadurch gekennzeichnet, dass** der ersten und/oder der zweiten Steuereinrichtung Mittel zur Fehlererkennung zugeordnet sind und diese eine Sollwertüberwachung und/oder eine Überwachung der Änderungsgeschwindigkeit des Sollwerts und/oder eine Istwertüberwachung auf Extremwerte und/oder eine Zwelpunktregelung mit einer Regelungsfrequenzüberwachung umfassen.

7. Elektrohydraulisches Ventil nach wenigstens einem der vorangehenden Ansprüche, **dadurch gekennzeichnet, dass** die erste Ventilvorrichtung (20) und/oder die zweite Ventilvorrichtung (30) als Proportional-Wegeventil ausgebildet sind.

8. Elektrohydraulisches Ventil nach wenigstens einem der vorangehenden Ansprüche, **dadurch gekennzeichnet, dass** die erste Ventilvorrichtung (20) und/oder die zweite Ventilvorrichtung (30) eine 3/3- oder eine 4/3-Ventilvorrichtung ist.

9. Elektrohydraulisches Ventil nach wenigstens einem der vorangehenden Ansprüche, **dadurch gekennzeichnet, dass** der Zulaufkanal P gedrosselt ist.

10. Elektrohydraulisches Ventil nach Anspruch 9, **dadurch gekennzeichnet, dass** der Zulaufkanal P einen kleinem Querschnitt als der Ablaufkanal T aufweist.

11. Elektrohydraulisches Ventil nach wenigstens einem der Ansprüche 9 oder 10, **dadurch gekennzeichnet, dass** der Zulaufkanal P eine Blende umfasst.

## Claims

1. An electrohydraulic valve arrangement, including
1,1 an inlet channel P, a working channel A and an outlet channel T;
1.2 a first valve system (20) fitted with a first valve piston (3.1), with a first control device and a first magnetic regulating unit (15.1) for operating the first valve piston (3,1) with a regulated actuating force;
1.3 a second valve system (30) fitted with a second valve piston (3.1), with a second control device and a second magnetic regulating unit (15.2) for operating the second valve piston (3.2) with a regulated actuating force;
1.4 the first and the second valve systems (20, 30) are arranged parallel relative to one another, so that a hydraulic connection can be provided between the inlet channel P and the working channel A and/or the working channel A and the outlet channel T or such a connection can be closed by the positioning of the first valve piston (3.1) and/or of the second valve piston (3.2);
1.5 in operation either the first valve system or the second valve system (3.1, 3.2) is active and fulfils the function of the electrohydraulic valve arrangement, the other valve system then being passive;
1.6 if the control device of the previously active valve system recognises an error, it activates the previously passive valve system and deactivates itself;
1.7 if the control device of the previously passive valve system recognises an error, it activates itself and deactivates the previously active valve system;
1.8 the deactivation of a valve system includes moving the valve piston of this valve system to the hydraulic neutral position by means of a device separate from the magnetic regulating unit.

2. An electrohydraulic valve according to claim 1, **characterised in that** the first and/or the second magnetic regulating unit (20, 30) contains a regulating magnet (15.1, 15.2), which is entered a force setpoint value corresponding to the actuating force of the valve piston (3.1, 3.2).

3. A valve system according to claim 2, **characterised in that** the first valve system (20) and/or the second valve system (30) contains a control magnet (17.1, 17.2), which when activated moves the valve piston (3.1, 3.2) to the hydraulic centre.

4. An electrohydraulic valve according at least to one of the claims 2 or 3, **characterised in that** the electrohydraulic valve regulates the volume stream for at least one related working cylinder (2) and **in that** a position regulator (6) is allocated to the first valve system and/or to the second valve system, which regulates the position of the working cylinder (2) by regulating the volume stream.

5. An electrohydraulic valve according to claim 4, **characterised in that** the position regulator (6) contains a secondary regulating circuit for regulating the actuating force (5) of the valve piston (3.1, 3.2).

6. An electrohydraulic valve according at least to one of the claims 1 to 5, **characterised in that** means for error recognition are allocated to the first and/or the second control device and said means include a setpoint value monitoring and/or a monitoring of the modification speed of the setpoint value and/or an actual value monitoring in relation to extreme values and/or an on-off control fitted with a regulation frequency monitoring.

7. An electrohydraulic valve according at least to one of the previous claims, **characterised in that** the first valve system (20) and/or the second valve system (30) are designed as a proportional way valve.

8. An electrohydraulic valve according at least to one of the previous claims, **characterised in that** the first valve system (20) and/or the second valve system (30) is a 3/3 or a 4/3 valve system.

9. An electrohydraulic valve according at least to one of the previous claims, **characterised in that** the inlet channel P is choked.

10. An electrohydraulic valve according to claim 9, **characterised in that** the inlet channel P presents a smaller cross-section than the outlet channel T.

11. An electrohydraulic valve according at least to one of the claims 9 to 10, **characterised in that** the inlet channel P contains a protection panel.

## Revendications

1. Configuration de soupapes électrohydrauliques, comprenant;
1.1 un canal d'entrée P, un canal de travail A et un canal de sortie T;
1.2 un premier système de soupape (20) disposant d'un premier piston de soupape (3.1), d'un premier dispositif de commande et d'un premier dispositif de régulation magnétique (15.1) pour soumettre le premier piston de soupape (3.1)) à une force d'actionnement régulée;
1.3 un second système de soupape (30) disposant d'un second piston de soupape (3.2), d'un second dispositif de commande et d'un second dispositif de régulation magnétique (15,2) pour soumettre le second piston de soupape (3.2)) à une force d'actionnement régulée;
1.4 le premier système de soupape et le second système de soupape (20, 30) sont disposés parallèles l'un à l'autre, de façon à produire une connexion hydraulique entre le canal d'entrée P et le canal de travail A et/ou le canal de travail A et le canal de sortie T ou fermer une telle connexion une telle connexion par le positionnement du premier piston de soupape (3.1) et/ou du second piston de soupape (3.2);
1.5 en service le premier système de soupape ou bien le second système de soupape (3.1, 3.2) est actif et remplit la fonction de la configuration de soupapes électrohydrauliques, l'autre système de soupape étant alors passif;
1.6 le dispositif de commande du système de soupape jusqu'alors actif reconnaît une erreur, il active alors le système de soupape jusqu'alors passif et se désactive automatiquement;
1.7 le dispositif de commande du système de soupape jusqu'alors passif reconnaît une erreur, il s'active alors automatiquement et désactive le système de soupape jusqu'alors actif;
1.8 la désactivation d'un système de soupape consiste à déplacer le piston de soupape de ce système de soupape vers la position neutre hydraulique à l'aide d'un dispositif séparé du dispositif de régulation magnétique.

2. Soupape électrohydraulique selon la revendication 1, **caractérisée en ce** en ce que le premier dispositif de régulation magnétique et/ou le second dispositif de régulation magnétique (20, 30) comprend un aimant de régulation (16.1, 15.2), auquel est affecté une valeur de consigne d'effort correspondant à la force d'actionnement du piston de soupape (3.1, 3,2).

3. Système de soupape selon la revendication 2, **caractérisé en ce** en ce que le premier système de soupape (2D) et/ou le second système de soupape (30) comprend un aimant de commande (17.1,17.2), qui une fois activé déplace le piston de soupape (3.1, 3.2) vers le centre hydraulique.

4. Soupape électrohydraulique selon l'une au moins des revendications2 ou 3, **caractérisée en ce que** la soupape électrohydraulique régule le courant volumique pour au moins un cylindre de travail associé (2) et que le premier système de soupape et/ou le second système de soupape dispose d'un régulateur de position (6), qui régule la position du cylindre de travail (2) en régulant le courant volumique.

5. Soupape électrohydraulique selon la revendication 4, **caractérisée en ce que** le régulateur de position (6) comprend un circuit de régulation secondaire permettant de réguler la force d'actionnement (5) du piston de soupape (3.1, 3.2).

6. Soupape électrohydraulique selon l'une au moins des revendications 1 à 5, **caractérisée en ce que** le premier dispositif de commande et/ou le second dispositif de commande dispose de moyens de reconnaissance des erreurs et que lesdits moyens comprennent une surveillance de la valeur de consigne et/ou une surveillance de la vitesse de changement de la valeur de consigne et/ou une surveillance de la valeur réelle en fonction de valeurs extrêmes et/ou une régulation marche-arrêt équipée d'une surveillance de fréquence de régulation.

7. Soupape électrohydraulique selon l'une au moins des revendications précédentes, **caractérisé en ce que** le premier système de soupape () et/ou le second système de soupape (30) sont conçus comme distributeur proportionnel.

8. Soupape électrohydraulique selon l'une au moins des revendications précédentes, **caractérisée en ce que** le premier système de soupape (20) et/ou le second système de soupape (30) sont un système de soupape 3/3 ou 4/3.

9. Soupape électrohydraulique selon l'une au moins des revendications précédentes, **caractérisée en ce que** le canal d'entrée P est étranglé.

10. Soupape électrohydraulique selon la revendication 9, **caractérisée en ce que** le canal d'entrée P présente une section transversale inférieure à celle du canal de sortie T.

11. Soupape électrohydraulique selon l'une au moins des revendications 9 ou 10, **caractérisée en ce que** le canal d'entrée P comporte un panneau de protection.
